# EUROPEAN PATENT SPECIFICATION

(11) **EP 3 418 507 B1**
(45) Date of publication and mention of the grant of the patent: **24.09.2025**
(21) Application number: 17461548.4
(22) Date of filing: 19.06.2017
(51) Int. Cl.: F01D 25/30, F01D 25/02, F02C 7/047, F02K 1/04, F02C 6/18, F02K 1/78, B64D 33/04

(54) **EXHAUST ASSEMBLY WITH VORTEX GENERATOR**
ABGASANORDNUNG MIT WIRBELGENERATOR
ENSEMBLE D'ÉCHAPPEMENT COMPORTANT UN GÉNÉRATEUR DE TOURBILLON

(43) Date of publication of application: 26.12.2018
(60) Divisional application: 25181029.7
(73) Proprietor: General Electric Company Polska Sp. Z o.o, 02-256 Warszawa (PL)
(72) Inventor: IGLEWSKI, Tomasz, 02-256 Warszawa (PL)
(74) Representative: Patpol Kancelaria Patentowa Sp. z o.o.

(56) References cited:
- EP-A1- 2 876 258
- EP-A1- 2 905 227
- EP-A2- 1 050 678
- FR-A- 871 408
- FR-A1- 3 037 106
- GB-A- 2 314 887
- US-A- 3 025 667
- US-A- 3 300 976
- US-A1- 2009 194 633
- US-A1- 2013 022 444
- US-A1- 2015 308 377

## Description

### BACKGROUND OF THE INVENTION

Contemporary turbo-prop engine aircraft can include one or more propellers attached to engines of the aircraft. Exhaust gases generated within the engines can be directed outward via an exhaust assembly. The direction in which exhaust gases exit the exhaust assembly can provide additional thrust to that provided by the propellers.

Exhaust gases can make an almost 180 degree turn in direction when exiting the exhaust assembly. The turn can include a low radius before discharged to ambient air. Separation within the exhaust gases can reduce overall exhaust system and engine performance. Minimizing the separation is beneficial for improved performance.

The document US3300976 shows guide vanes located in a central area of a non-reverse flow portion of the exhaust. The document EP1050678 discloses guide vanes located in a position what is to be a vectored thrust exhaust. The document GB 2314887shows a dual wall nacelle having depressions formed in the inner wall which contact the outer wall. The depressions function to transfer heat to the outer wall to prevent ice formation. This document is about a laminar flow. The document FR 871408 also concerns a de-icing structure. The document FR 3037106 relates to a heat exchanger having a fluid circuit including a water inlet which is configured to connect to an outlet of water or water vapor from a fuel cell device. The document EP 2905227 relates to a turbine engine with a reverse portion in the exhaust conduit. However there is no disclosure of vortices or the like in the reverse portion of the exhaust conduit. The document US0308377 A1 discloses thrust-reverser assemblies that utilize active-control and systems and methods including the same. Other examples of prior art solutions are also available in documents US 3 025 667 and US 2013/022444.

### BRIEF DESCRIPTION OF THE INVENTION

According to a first aspect of the invention it is provided a an exhaust assembly for a turbine engine comprising an exhaust conduit comprising a reverse flow portion, said reverse flow portion defining a turn with an interior, wherein the reverse flow portion comprises an exhaust stub extending from an exhaust collector to an exhaust outlet defining the exhaust conduit and forming the turn, characterized in that it further comprises at least one vortex generator being provided within the interior of said turn, said at least one vortex generator being an anti-ice scoop. According to a second aspect of the invention it is provided a turbine engine having a turbine section, a compressor section, and a combustor, characterized in that the turbine engine comprises: an exhaust assembly coupled to the turbine section, and comprising a reverse flow portion defining a turn with an interior, wherein the reverse flow portion comprises an exhaust stub extending from an exhaust collector to an exhaust outlet defining the exhaust conduit and forming the turn, characterized in that it further comprises at least one vortex generator (50) being provided within the interior of said turn, said at least one vortex generator (50) being an anti-ice scoop.

According to a third aspect of the invention it is provided a method of exhausting combustion gas from a turbine engine defined in claims 7-11, the method comprising: reversing a flow of combustion gas exiting a turbine of the engine; and generating a vortex in the flow of combustion gas during the reversing and scooping a portion of the combustion gas into an anti-ice scoop.

In one aspect, the present disclosure relates to an exhaust assembly for a turbine engine comprising an exhaust conduit with the exhaust conduit comprising a reverse flow portion defining a turn with an interior, and at least one vortex generator provided within the interior of the turn.

The reverse flow portion can comprise an exhaust stub extending from an exhaust collector to an exhaust outlet defining the exhaust conduit and forming the turn. The exhaust collector can comprise an inner radius and an outer radius greater than the inner radius at the turn, and the vortex generator is located on the inner radius. The inner radius can be less than the outer radius.

The vortex generator can be secured to or integral with the exhaust collector. The at least one vortex generator can be multiple vortex generators stacked along the inner radius.

The exhaust collector can further comprise an anti-ice scoop. The anti-ice scoop can be fluidly coupled to an anti-ice system via a snorkel. The exhaust collector can comprise an inner radius and an outer radius greater than the inner radius at the turn, and the anti-ice scoop can be located on the inner radius. The anti-ice scoop can be the vortex generator.

In another aspect, the present disclosure relates to a turbine engine having a turbine section, a compressor section, and a combustor, the turbine engine comprising an exhaust assembly coupled to the turbine section and having a reverse flow portion defining a turn, and at least one vortex generator provided at the turn.

The reverse flow portion can comprise an exhaust stub extending from an exhaust collector to an exhaust outlet defining an exhaust conduit and forming the turn. The exhaust collector can comprise an inner radius and an outer radius greater than the inner radius at the turn, and the vortex generator is located on the inner radius. The vortex generator can be secured to or integral with the exhaust collector. The at least one vortex generator can be multiple vortex generators stacked along the inner radius.

The exhaust collector can further comprise an anti-ice scoop. The anti-ice scoop can be fluidly coupled to an anti-ice system via a snorkel. The anti-ice scoop can be the vortex generator.

In another aspect, the present disclosure relates to a method of exhausting combustion gas from a turbine engine, the method comprising reversing a flow of combustion gas exiting a turbine of the engine, and generating a vortex in the flow of combustion gas during the reversing.

The reversing can comprise flowing the combustion gas through a turn in an exhaust conduit. The generating a vortex can comprise flowing the combustion gas over a vortex generator located within the turn. The method can further include scooping a portion of the combustion gas into an anti-ice scoop and circulating the combustion gas around an inlet.

### BRIEF DESCRIPTION OF THE DRAWINGS

In the drawings:
FIG. 1 is a schematic view of an aircraft with a turboprop engine including an exhaust assembly.
FIG. 2 is an enlarged view of the exhaust assembly from FIG. 1 with an exhaust collector.
FIG. 3 is a perspective view of the exhaust collector from FIG. 2 with a vortex generator.
FIG. 4 is a perspective view of exemplary vortex generators in accordance with various aspects described herein.
FIG. 5A is a top view of an exhaust flow path for a prior art exhaust assembly for the aircraft of FIG. 1.
FIG. 5B is a top view of an exhaust flow path for the exhaust assembly of FIG. 1 according to aspects of the disclosure described herein.
FIG. 6 is a perspective view of an inlet for the turboprop engine of FIG. 1 according to another aspect of the exhaust assembly described herein.

### DESCRIPTION OF EMBODIMENTS OF THE INVENTION

The described embodiments of the present disclosure are directed to an exhaust assembly for a turbine engine. For purposes of illustration, the present disclosure will be described with respect to a turboprop engine for an aircraft. It will be understood, however, that the disclosure is not so limited and may have general applicability in other aircraft engines as well as in non-aircraft applications, such as other mobile applications and nonmobile industrial, commercial, and residential applications.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of the disclosure. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary. In addition, "a set" as used herein can include any number of a particular element, including only one.

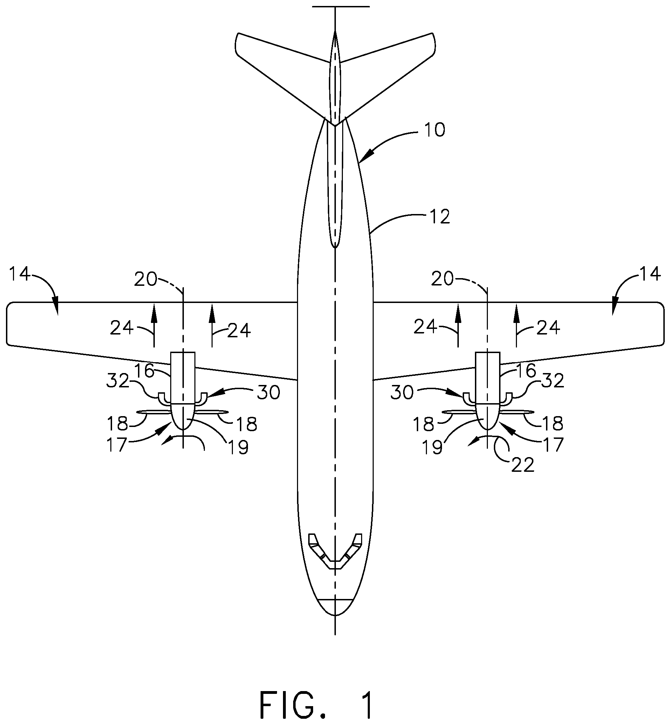

FIG. 1 depicts an aircraft 10 having a fuselage 12 and wings 14 extending outward from the fuselage 12. The aircraft 10 can include at least one engine assembly such as a turbo-prop aircraft engine 16 coupled to the aircraft 10, shown as a set of engines 16 coupled with the opposing wings 14. The engine 16 can include a set of propeller assemblies 17 coupled with the engine 16, and including propeller blades 18 and a rotatable hub assembly 19. The engine 16 can drive the propeller assembly 17 about a rotational axis 20 in a direction indicated by the arrow 22. The propeller blades 18 can further be configured or angled relative to the propeller assembly rotational axis 20 such that the rotation 22 of the propeller blades 18 generates thrust (illustrated as arrow 24) for the aircraft 10. An exhaust assembly 30 having a set of exhaust stubs 32 can extend outward from the engine 16 to direct exhaust gases away from the engine 16 (or any heatsensitive components on the fuselage 12 or wings 14) in addition to generating additional thrust for the aircraft 10.

While an aircraft 10 having two turbo-prop engines 16 has been illustrated, embodiments of the disclosure can include any number of engines 16, propeller assemblies 17, or propeller blades 18, or any placement of the engine 16, assemblies 17, or blades 18 relative to the aircraft. Embodiments of the disclosure can further be applied to different aircraft engine 16 types, including, but not limited to, piston-based combustion engines, or electrically-driven engines. Additionally, the rotation 22 of the propeller assemblies 17 or propeller blades 18 is provided for understanding of the embodiments of the disclosure. Embodiments of the disclosure can include alternative directions of rotation 22 of the propeller assemblies 17 or propeller blades 18, or embodiments wherein a set of engines 16 rotate propeller blades 18 in the same or opposing directions.

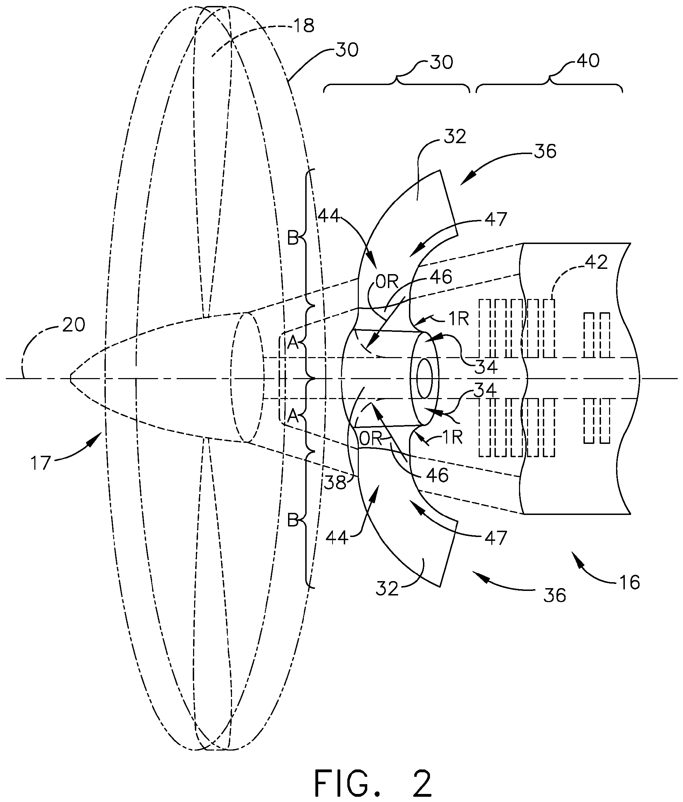

FIG. 2 is an enlarged view of the propeller assembly 17 and a portion of the engine 16 with the exhaust assembly 30 illustrated in further detail. The propeller assembly 17 and engine 16 are shown in phantom to emphasize the exhaust assembly 30. The propeller blades 18 can define a circumferential boundary 33 formed by a full rotation of the tips of the blades 18.

The exhaust assembly 30 includes the set of exhaust stubs 32, illustrated as two exhaust stubs 32, which can extend from an inlet 34 to an outlet 36. An exhaust collector 38 defines a first portion (A) of the exhaust and is centered along the centerline 20 fluidly coupling a turbine section 40 having a turbine 42 at the inlet 34. An exhaust stub 32 defines a remaining portion (B) of the exhaust extending from the exhaust collector 38 and terminating in the outlet 36.

A reverse flow portion 44 comprised as part of the exhaust collector 38 includes a turn 46. The turn 46 is at least in part defined by an inner radius IR and an outer radius OR proximate the inlet 34 of the exhaust stub 32. The turn 46 is between the inner radius IR and the outer radius OR where the inner radius IR is smaller than the outer radius OR. The exhaust stub 32 together with the exhaust collector 38 define an exhaust conduit 47. The inner radius IR and outer radius OR are the radii for opposing surfaces within the exhaust conduit 47.

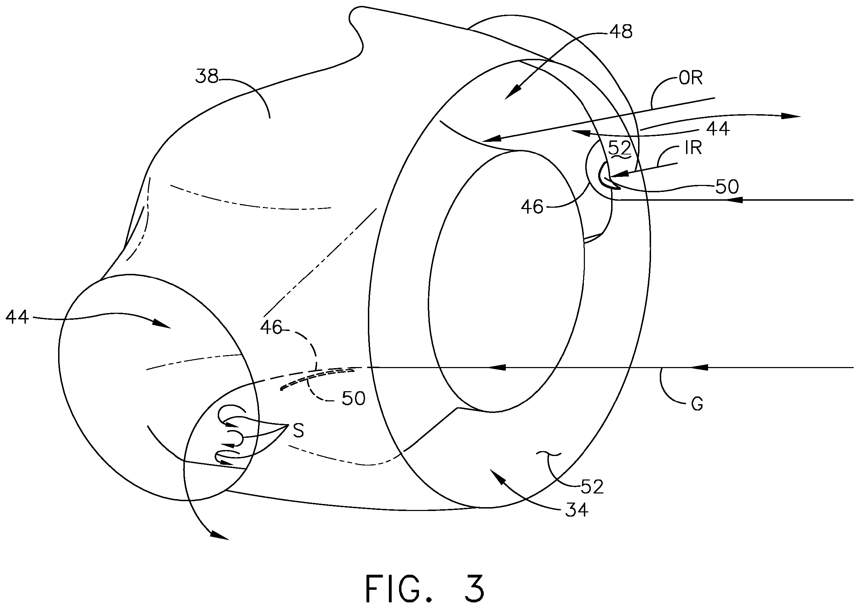

A perspective view of the exhaust collector 38 is illustrated in FIG. 3. For clarity, the exhaust stubs 32 have been removed. An interior 48 of the exhaust is defined at least in part by the exhaust collector 38. At least one vortex generator 50 is provided within the interior 48 on an interior surface 52 at the inner radius IR. While only two vortex generators 50 are illustrated, it is contemplated that multiple vortex generators 50 can be provided along the interior surface 52 on the inner radius IR.

A flow of exhaust gases illustrated by arrows (G) can move from the turbine section (FIG. 2) into the interior 48 through the reverse flow portion 44 by moving around the turn 46 and flowing over the at least one vortex generator 50. It is further contemplated that the turn 46 can include turning vanes (not shown) to further enable the turning of the exhaust gases (G). The vortex generator 50 can help to increase a swirling motion of the flow of exhaust gasses (G) downstream of the turn 46 to produce a vortex (V). The vortices (V) can help to minimize flow separations within the exhaust.

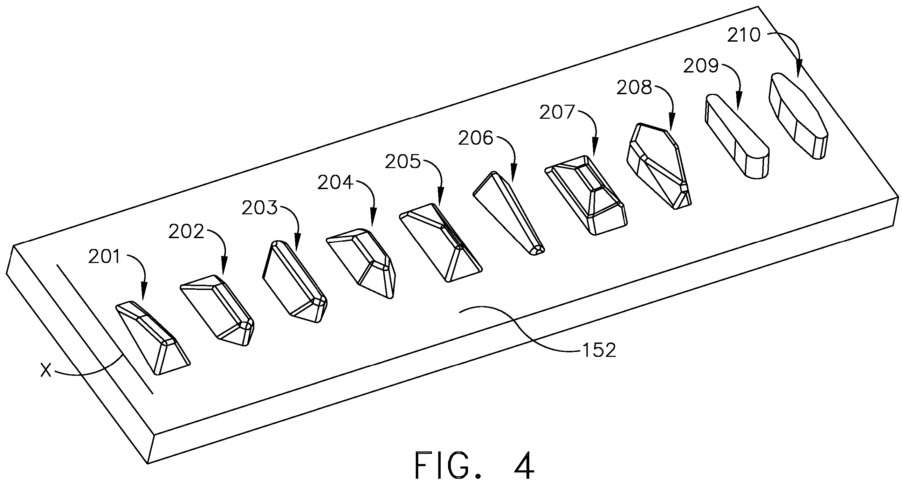

A collection of exemplary vortex generators is illustrated in FIG. 4. The cross-sectional shape can be viewed in a plane orthogonal to the body axis (X) of each vortex generator. The planform is the contour of the vortex generator as viewed from above the interior surface 152 as described herein from which the collection of vortex generators projects.

Some non-limiting examples of cross-sectional shapes include rectangular, triangular, and trapezoidal, and may be at least partially defined by the shape of the leading and trailing surfaces of the vortex generator. Some non-limiting examples of shapes for the leading the trailing surfaces include ramped, wedged, or rounded. For example, the leading surfaces of vortex generators 201, 205, 207, 208 are generally ramped; those of vortex generators 202, 203, 204, 206 are generally wedged; and those of vortex generators 209, 210 are generally rounded. The trailing surfaces of vortex generators 201, 202, 204, 205, 206, 207 are generally ramped; those of vortex generators 203, 208 are generally wedged; and those of vortex generators 209, 210 are generally rounded. The ramped, wedged, or rounded surfaces help maintain a high exhaust gas velocity along the interior surface 152 which can reduce the tendency for dust to accumulate on the interior surface 152.

Some non-limiting examples of planforms include rectangular, trapezoidal, diamond-shaped, kite-shaped, teardrop-shaped, ovoid, elliptical, pentagonal, hexagonal, and heptagonal. For example, the vortex generator 201 has a generally trapezoidal planform, the vortex generators 202, 204 have a generally pentagonal planform, the vortex generator 203 has a generally hexagonal planform, the vortex generators 205, 208 have a generally heptagonal planform, the vortex generator 206 has a generally kite-shaped planform, the vortex generator 207 has a generally rectangular planform, the vortex generator 209 has a generally teardrop-shaped planform, and the vortex generator 210 has a generally elliptical planform.

An exemplary vortex generator 206 includes a generally kite-shaped planform with a wedged leading surface and a ramped trailing surface allows for smaller vortices to initiate at the leading surface and grow along the diverging and expanding side walls that intersect the interior surface 152. The kite-shaped planform presents a small initial disturbance to the exhaust gas flow that grows naturally as a vortex on both side walls.

In any of the above exemplary vortex generators, it is understood that while the drawings may show the vortex generators having sharp corners, edges, and/or transitions with the cooling surface for purposes of illustration, it may be more practical for the corners, edges, and/or transitions to be smoothly radiused or filleted. Furthermore, alternative exemplary vortex generators to the vortex generators illustrated as having smoothly radiused or filleted corners, edges, and/or transitions with the cooling surface may instead have sharp corners, edges, and/or transitions.

It should be understood that any of the exemplary vortex generators described herein are non-limiting examples for vortex generator 50. It should be further understood that the vortex generator 50 would be suited for placement along the inner radius IR and would therefore not be formed exactly as illustrated in FIG. 4. Additionally, the vortex generator 50 can be placed anywhere within the exhaust collector 38 or exhaust stubs 32 depending on the geometry, orientation, and flow pattern produced by the exhaust. Any combination of shapes or planforms described herein is also considered.

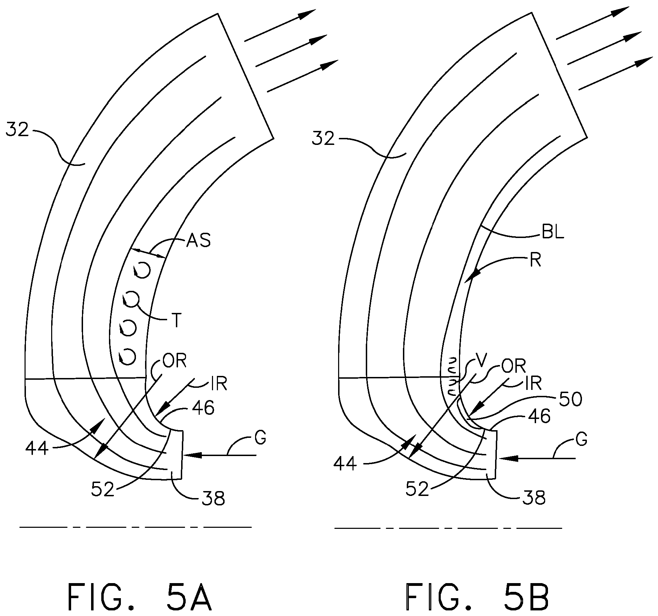

FIG. 5A is a schematic illustration of a top view of a prior art exhaust flow path including the reverse flow portion 44. The exhaust collector 38 is illustrated with no vortex generator 50 and with an airflow separation (AS) that can occur with respect to the interior surface 52. This airflow separation (AS) occurs due to the turn 46 and high speed flow resulting in turbulence (T) through the exhaust collector 38.

FIG. 5B is a schematic illustration of the exhaust flow path described herein with the vortex generator 50. A method of exhausting the combustion gas (G) from the turbine engine 16, includes reversing the flow of combustion gas (G) within the reverse flow portion 44 upon exiting the turbine 42 of the engine 16 and generating the vortex (V) in the flow of combustion gas (G) during the reversing. The method can include flowing the combustion gas (G) through the turn 46 in the exhaust stub 32 and flowing the combustion gas (G) over the vortex generator 50 located within the turn 46 to thereby generate the vortex (V). Placing the vortex generator 50 upstream of a region (R) where wasted energy corresponds to flow separation or recirculation will locally energize a boundary layer (BL), reducing separations and pressure loss. Energy can also be wasted by scrubbing interior surface 52 which can lead to the separation. By introducing a vortex generator 50, any low energy or weaker flow in the boundary layer is replaced by more energetic flow from a main stream portion of the combustion gas (G).

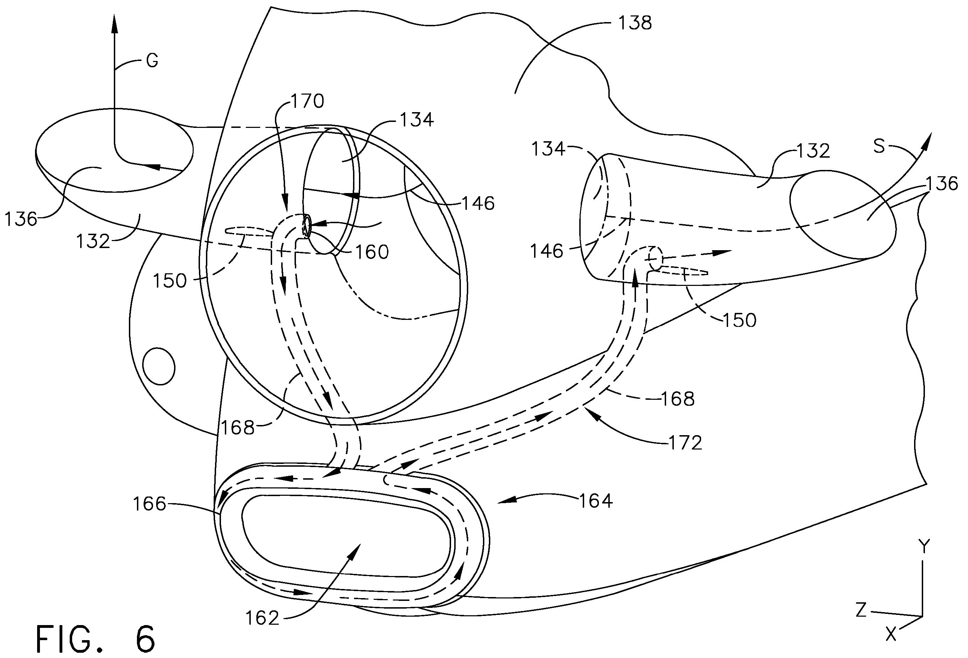

FIG. 6 illustrates a vortex generator 150 according to another aspect of the disclosure described herein. The vortex generator 150 is similar to the vortex generator 50, therefore, like parts will be identified with like numerals increased by 100, with it being understood that the description of the like parts of the first embodiment applies to the second embodiment, unless otherwise noted.

An anti-ice scoop 160 can be integral with, proximate to, or in place of the vortex generator 150. The illustration depicts an anti-ice scoop 160 and a vortex generator 150, however it is contemplated that the anti-ice scoop 160 is formed to be the vortex generator 150. In some aircraft, an engine inlet 162, in which air is received to pass through the engine 16, includes an anti-ice system 164. The anti-ice system 164 can include a conduit 166, coupled to the anti-ice scoop 160, in which hot air is circulated. Small pipes, referred to as snorkels 168, can be placed into exhaust stubs 132 downstream of where the exhaust stub 132 couples to an exhaust collector 138. The snorkels 168 connect the anti-ice scoop 160 to the conduit 166. A flow of combustion gases (G) can flow into at least one of the snorkels 168 via the anti-ice scoop 160 and pass through a delivery pipe 170. The flow of combustion gases (G) can enter the anti-ice scoop 160 due to an orientation of the anti-ice scoop 160 with respect to the flow of combustion gases (G). The combustion gases (G) can then circulate around the inlet 162 through the conduit 166 and exhaust back through a discharge pipe 172 coupled to an exhaust stream (S) for the other of the exhaust stubs 132. Again, the orientation of the anti-ice scoop 160 allows for the combustion gases (G) to discharge into the exhaust stream (S). The method disclosed herein can include scooping a portion of the exhaust gas (G) into the anti-ice scoop 160 and circulating the exhaust gas (G) around the inlet 162.

Installation of vortex generators upstream of the region where flow separation or recirculation can occur will locally energize the boundary layer which reduces separations and pressure losses and therefore improves overall engine performance. An additional benefit is that use of vortex generators can allow for lower radius turns, for example the inner radius (IR) as described herein, resulting in shorter and lighter engines.

In addition, the vortex generators can have integrated anti-ice scoops. The anti-ice scoops can minimize performance loss due to presence of anti-ice snorkels that act as vortex generators, plus the low energy boundary layer can be sucked out of the exhaust to the anti-ice system, further reducing the risk of flow separation.

It should be understood that application of the disclosed design is not limited to turboprop engines, but is applicable to turbine and turboshaft engines as well.

To the extent not already described, the different features and structures of the various embodiments can be used in combination, or in substitution with each other as desired. That one feature is not illustrated in all of the embodiments is not meant to be construed that it cannot be so illustrated, but is done for brevity of description. Thus, the various features of the different embodiments can be mixed and matched as desired to form new embodiments, whether or not the new embodiments are expressly described. All combinations or permutations of features described herein are covered by this disclosure.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and may include other examples that occur to those skilled in the art. Such other examples are intended to be within the scope of the claims if they have structural elements that do not differ from the literal language of the claims.

## Claims

1. An exhaust assembly (30) for a turbine engine comprising an exhaust conduit comprising a reverse flow portion, said reverse flow portion (44) defining a turn (46) with an interior (48), wherein the reverse flow portion (44) comprises an exhaust stub (32) extending from an exhaust collector (38) to an exhaust outlet (36) defining the exhaust conduit (47) and forming the turn (46), **characterized in that** it further comprises at least one vortex generator being provided within the interior (48) of said turn (46), said at least one vortex generator (50) being an anti-ice scoop (160).

2. The exhaust assembly of claim 1 wherein the exhaust collector (38) comprises an inner radius (IR) and an outer radius (OR) greater than the inner radius at the turn (46), and the vortex generator (50) is located on the inner radius.

3. The exhaust assembly of claim 2 wherein the inner radius (IR) is less than the outer radius (OR).

4. The exhaust assembly of claim 3 wherein the vortex generator (50) is secured to or integral with the exhaust collector (38).

5. The exhaust assembly of claim 4 wherein the at least one vortex generator (50) is multiple vortex generators stacked along the inner radius (IR).

6. The exhaust assembly of claim 1 wherein the anti-ice scoop (160) is fluidly coupled to an anti-ice system (164) via a snorkel (168).

7. A turbine engine (16) having a turbine section, a compressor section, and a combustor, the turbine engine comprising:
an exhaust assembly (30) coupled to the turbine section, and comprising a reverse flow portion (44) defining a turn (46) with an interior (48),
wherein the reverse flow portion (44) comprises an exhaust stub (32) extending from an exhaust collector (38) to an exhaust outlet (36) defining the exhaust conduit (47) and forming the turn (46), **characterized in that** it further comprises at least one vortex generator (50) being provided within the interior (48) of said turn (46), said at least one vortex generator (50) being an anti-ice scoop (160).

8. The turbine engine of claim 7 wherein the exhaust collector (38) comprises an inner radius (IR) and an outer radius (OR) greater than the inner radius at the turn (46), and the vortex generator (50) is located on the inner radius.

9. The turbine engine of claim 8 wherein the vortex generator (50) is secured to or integral with the exhaust collector (38).

10. The turbine engine of claim 9 wherein the at least one vortex generator (50) is multiple vortex generators stacked along the inner radius (IR).

11. The turbine engine of claim 7 wherein the anti-ice scoop (160) is fluidly coupled to an anti-ice system (164) via a snorkel (168).

12. A method of exhausting combustion gas (G) from a turbine engine defined in claims 7-11, the method comprising:
reversing a flow of combustion gas (G) exiting a turbine (42) of the engine (16); and
generating a vortex (V) in the flow of combustion gas (G) during the reversing and
scooping a portion of the combustion gas (G) into an anti-ice scoop (160).

13. The method of claim 12 wherein the reversing comprises flowing the combustion gas (G) through a turn (46) in an exhaust conduit (166).

14. The method of claim 13 wherein the generating a vortex (V) comprises flowing the combustion gas (G) over a vortex generator (50) located within the turn (46).

15. The method of claim 12 wherein it further comprises circulating the combustion gas (G) around an inlet (162).

## Patentansprüche

1. Abgasanordnung (30) für ein Turbinentriebwerk mit einer Abgasleitung, die einen Umkehrströmungsabschnitt aufweist, wobei der Umkehrströmungsabschnitt (44) eine Windung (46) mit einem Innenraum (48) definiert, wobei der Umkehrströmungsabschnitt (44) einen Abgasstutzen (32) aufweist, der sich von einer Abgassammelleitung (38) zu einem Abgasauslass (36) erstreckt, der die Abgasleitung (47) definiert und die Windung (46) bildet, **dadurch gekennzeichnet, dass** er ferner mindestens einen Wirbelerzeuger umfasst, der im Inneren (48) der Windung (46) vorgesehen ist, wobei der mindestens eine Wirbelerzeuger (50) eine Anti-Eis-Schaufel (160) ist.

2. Abgasanordnung nach Anspruch 1, wobei die Abgassammelleitung (38) einen inneren Radius (IR) und einen äußeren Radius (OR) aufweist, der größer ist als der innere Radius an der Windung (46), und der Wirbelerzeuger (50) am inneren Radius angeordnet ist.

3. Abgasanordnung nach Anspruch 2, wobei der Innenradius (IR) kleiner ist als der Außenradius (OR).

4. Abgasanordnung nach Anspruch 3, bei der der Wirbelerzeuger (50) an der Abgassammelleitung (38) befestigt oder mit dieser integriert ist.

5. Abgasanordnung nach Anspruch 4, wobei der mindestens eine Wirbelerzeuger (50) aus mehreren Wirbelerzeugeren besteht, die entlang des Innenradius (IR) gestapelt sind.

6. Abgasanordnung nach Anspruch 1, bei der die Anti-Eis-Schaufel (160) über einen Schnorchel (168) strömungstechnisch mit einem Anti-Eis-System (164) verbunden ist.

7. Turbinenmotor (16) mit einem Turbinenabschnitt, einem Verdichterabschnitt und einer Brennkammer, das Turbinentriebwerk umfasst Folgendes:
eine Abgasanordnung (30), die mit dem Turbinenabschnitt gekoppelt ist und einen Umkehrströmungsabschnitt (44) umfasst, der eine Windung (46) mit einem Innenraum (48) definiert,
wobei der Umkehrströmungsabschnitt (44) einen Abgasstutzen (32) aufweist, der sich von einer Abgassammelleitung (38) zu einem Abgasauslass (36) erstreckt, der die Abgasleitung (47) definiert und die Windung (46) bildet, **dadurch gekennzeichnet, dass** er ferner mindestens einen Wirbelerzeuger (50) umfasst, der im Inneren (48) der Windung (46) vorgesehen ist, wobei der mindestens eine Wirbelerzeuger (50) eine Anti-Eis-Schaufel (160) ist.

8. Turbinenmotor nach Anspruch 7, wobei die Abgassammelleitung (38) einen inneren Radius (IR) und einen äußeren Radius (OR) aufweist, der größer ist als der innere Radius an der Windung (46), und der Wirbelerzeuger (50) am inneren Radius angeordnet ist.

9. Turbinenmotor nach Anspruch 8, bei dem der Wirbelerzeuger (50) an der Abgassammelleitung (38) befestigt oder mit dieser integriert ist.

10. Turbinenmotor nach Anspruch 9, wobei der mindestens eine Wirbelerzeuger (50) aus mehreren Wirbelerzeugeren besteht, die entlang des Innenradius (IR) gestapelt sind.

11. Turbinenmotor nach Anspruch 7, bei dem die Anti-Eis-Schaufel (160) über einen Schnorchel (168) strömungstechnisch mit einem Anti-Eis-System (164) verbunden ist.

12. Verfahren zum Abführen von Verbrennungsgas (G) aus einem Turbinenmotor nach einem der Ansprüche 7 bis 11, wobei das Verfahren Folgendes umfasst:
Umkehrung einer Strömung von Verbrennungsgas (G), das aus einer Turbine (42) des Motors (16) austritt; und
Erzeugen eines Wirbels (V) in der Strömung des Verbrennungsgases (G) während der Umkehrung und
Schöpfen eines Teils des Verbrennungsgases (G) in eine Anti-Eis-Schaufel (160).

13. Verfahren nach Anspruch 12, wobei die Umkehrung das Strömen des Verbrennungsgases (G) durch eine Windung (46) in einer Abgasleitung (166) umfasst.

14. Verfahren nach Anspruch 13, wobei das Erzeugen eines Wirbels (V) das Strömen des Verbrennungsgases (G) über einen Wirbelerzeuger (50) umfasst, der sich in der Windung (46) befindet.

15. Verfahren nach Anspruch 12, wobei es ferner das Zirkulieren des Verbrennungsgases (G) um einen Einlass (162) umfasst.

## Revendications

1. Ensemble d'échappement (30) pour un moteur à turbine comprenant un conduit d'échappement comprenant une partie à écoulement inversé, ladite partie à écoulement inversé (44) définissant un virage (46) avec un intérieur (48), la partie à écoulement inversé (44) comprenant un embout d'échappement (32) s'étendant d'un collecteur d'échappement (38) à une sortie d'échappement (36) définissant le conduit d'échappement (47) et formant le virage (46), **caractérisé en ce qu'**il comprend en outre au moins un générateur de tourbillon prévu à l'intérieur (48) dudit virage (46), ledit au moins un générateur de tourbillon (50) étant une pelle antigivre (160).

2. Ensemble d'échappement selon la revendication 1, dans lequel le collecteur d'échappement (38) comprend un rayon intérieur (IR) et un rayon extérieur (OR) supérieur au rayon intérieur au niveau du virage (46), et le générateur de tourbillon (50) est situé sur le rayon intérieur.

3. Ensemble d'échappement selon la revendication 2, dans lequel le rayon intérieur (IR) est inférieur au rayon extérieur (OR).

4. Ensemble d'échappement selon la revendication 3, dans lequel le générateur de tourbillon (50) est fixé ou intégré au collecteur d'échappement (38).

5. Ensemble d'échappement selon la revendication 4, dans lequel l'au moins un générateur de tourbillon (50) consiste en plusieurs générateurs de tourbillon empilés le long du rayon intérieur (IR).

6. Ensemble d'échappement selon la revendication 1, dans lequel la pelle antigivre (160) est couplée fluidiquement à un système antigivre (164) par l'intermédiaire d'un tuba (168).

7. Moteur à turbine (16) comportant une section de turbine, une section de compresseur et une chambre de combustion, le moteur à turbine comprenant :
un ensemble d'échappement (30) couplé à la section de turbine, et comprenant une partie à écoulement inversé (44) définissant un virage (46) avec un intérieur (48),
la partie à écoulement inversé (44) comprenant un embout d'échappement (32) s'étendant d'un collecteur d'échappement (38) à une sortie d'échappement (36) définissant le conduit d'échappement (47) et formant le virage (46), **caractérisé en ce qu'**il comprend en outre au moins un générateur de tourbillon (50) prévu à l'intérieur (48) dudit virage (46), ledit au moins un générateur de tourbillon (50) étant une pelle antigivre (160).

8. Moteur à turbine selon la revendication 7, dans lequel le collecteur d'échappement (38) comprend un rayon intérieur (IR) et un rayon extérieur (OR) supérieur au rayon intérieur au niveau du virage (46), et le générateur de tourbillon (50) est situé sur le rayon intérieur.

9. Moteur à turbine selon la revendication 8, dans lequel le générateur de tourbillon (50) est fixé ou intégré au collecteur d'échappement (38).

10. Moteur à turbine selon la revendication 9, dans lequel l'au moins un générateur de tourbillon (50) consiste en plusieurs générateurs de tourbillon empilés le long du rayon intérieur (IR).

11. Moteur à turbine selon la revendication 7, dans lequel la pelle antigivre (160) est couplée fluidiquement à un système antigivre (164) par l'intermédiaire d'un tuba (168).

12. Procédé d'évacuation des gaz de combustion (G) d'un moteur à turbine défini dans les revendications 7 à 11, le procédé comprenant :
inversion d'un écoulement de gaz de combustion (G) sortant d'une turbine (42) du moteur (16) ; et
génération d'un tourbillon (V) dans l'écoulement du gaz de combustion (G) au cours de l'inversion et
récupération d'une partie du gaz de combustion (G) dans une pelle antigivre (160).

13. Procédé selon la revendication 12, dans lequel l'inversion comprend l'écoulement du gaz de combustion (G) à travers un virage (46) dans un conduit d'échappement (166).

14. Procédé selon la revendication 13, dans lequel la génération d'un tourbillon (V) comprend l'écoulement du gaz de combustion (G) sur un générateur de tourbillon (50) situé à l'intérieur du virage (46).

15. Procédé selon la revendication 12 comprenant en outre la circulation du gaz de combustion (G) autour d'une entrée (162).
